# EUROPEAN PATENT SPECIFICATION

(11) **EP 4 502 110 B1**
(45) Date of publication and mention of the grant of the patent: **16.09.2026**
(21) Application number: 23846482.0
(22) Date of filing: 24.07.2023
(51) Int. Cl.: C10B 21/10, G05D 23/19

(54) **FURNACE TEMPERATURE CONTROL DEVICE, FURNACE TEMPERATURE CONTROL METHOD, AND COKE MANUFACTURING METHOD**
OFENTEMPERATURSTEUERUNGSVORRICHTUNG, OFENTEMPERATURSTEUERUNGSVERFAHREN UND KOKSHERSTELLUNGSVERFAHREN
DISPOSITIF DE RÉGULATION DE LA TEMPÉRATURE D'UN FOUR, PROCÉDÉ DE RÉGULATION DE LA TEMPÉRATURE D'UN FOUR ET PROCÉDÉ DE FABRICATION DE COKE

(30) Priority: 25.07.2022 JP 2022118286
(43) Date of publication of application: 05.02.2025
(73) Proprietor: JFE Steel Corporation, Tokyo 100-0011 (JP)
(72) Inventor: KASE, Hiroto, Tokyo 100-0011 (JP); HASHIMOTO, Yoshinari, Tokyo 100-0011 (JP); KAWAI, Toshimitsu, Tokyo 100-0011 (JP); KUBOTA, Yuki, Tokyo 100-0011 (JP); OHGI, Taro, Tokyo 100-0011 (JP)
(74) Representative: Haseltine Lake Kempner LLP
(86) International application number: PCT/JP2023/027073
(87) International publication number: WO 2024/024752

(56) References cited:
- JP-A- H03 265 685
- JP-A- H05 255 668
- JP-A- H06 158 050
- JP-A- H1 180 737
- JP-A- S61 141 787
- KR-A- 20130 032 053

## Description

### TECHNICAL FIELD

The present disclosure relates to a furnace temperature control device, a method of controlling furnace temperature, and a method of producing coke. The present disclosure relates, in particular, to a furnace temperature control device, a method of controlling furnace temperature, and a method of producing coke in a coke oven in which combustion chambers and carburization chambers are connected alternately to form a furnace group.

### BACKGROUND

In a coke oven in which combustion chambers and carburization chambers are connected alternately to form a furnace group, coke is produced by dry distillation of coal charged in a carburization chamber with heat from the adjacent combustion chamber. It is important to control the temperature of the combustion chamber or carbonization chamber to the desired temperature in order to achieve stable quality of coke to be produced in the coke oven, increase production efficiency, and cut down on the amount of heat for dry distillation. Because coke ovens have a large heat capacity in the furnace body and a long time constant of response to actions implemented to manipulate the furnace temperature, actions need to be implemented by predicting the future temperature with high accuracy in order to control the temperature of the combustion chamber or carburization chamber with high accuracy. However, the coke oven temperature varies in a complex manner due to numerous variation factors, such as the properties of the coal to be charged, the dry distillation conditions, and the conditions of the adjacent carbonization and combustion chambers, in addition to the fuel gas supply conditions. It has therefore has been difficult to predict the future temperature with high accuracy.

As a method for predicting the future temperature with high accuracy, Patent Literature (PTL) 1 proposes modeling the behavior of temperature with respect to variation factors for the coke oven temperature as a step response of a first-order delay system that occurs in a time-series at regular intervals.

To reduce the furnace temperature prediction error due to disturbances and to the uncertainty of the mathematical model for furnace temperature prediction, PTL 2 proposes a method to improve the accuracy of future temperature prediction by reflecting the furnace temperature prediction error from the previous dry distillation cycle in the furnace temperature prediction calculation at the current time. PTL 3 discloses an apparatus and a method for detecting the combustion chamber temperature in real time to control the amount of heat supplied to the coke oven.

### CITATION LIST

### Patent Literature

PTL 1: JP H6-158050 A
PTL 2: JP H5-255668 A
PTL 3: KR 2013 0032053 A

### SUMMARY

### (Technical Problem)

Here, in the technology disclosed in PTL 1, the parameters of the step response model are used after being identified in advance by investigating the furnace temperature variation when furnace temperature variation factors are individually varied. As a result, the accuracy of the model deteriorates for reasons such as long-term changes in furnace conditions. It is also difficult to identify the parameters of the step response model for each furnace temperature variation factor during normal operation because a plurality of furnace temperature variation factors vary continuously during normal coke oven operation. Furthermore, the accuracy of temperature prediction is greatly reduced when the temperature relative to a coke oven temperature variation factor deviates from the behavior of a first-order delay system.

The technology in PTL 2 improves the accuracy of future temperature prediction by reflecting the furnace temperature prediction error from the previous dry distillation cycle in the furnace temperature prediction calculation at the current time. In general, however, coal properties, the amount of heat supplied, or other furnace temperature variation factors can vary significantly from the previous dry distillation cycle. In this case, it is difficult to explain the errors in the mathematical model for furnace temperature prediction solely by the prediction errors in the previous dry distillation cycle. The prediction accuracy consequently deteriorates. Further taking into consideration the combustion chamber and carbonization chamber in close proximity to the target yields an enormous combination of the variation patterns of the furnace temperature variation factors. It is therefore difficult to take into consideration the combustion chamber and carbonization chamber in close proximity, which makes the prediction accuracy insufficient.

In this way, it has been challenging to predict the future furnace temperature with high accuracy in an environment such that the state of the coke oven changes from moment to moment and a plurality of furnace temperature variation factors vary continuously.

In light of these circumstances, it is an aim of the present disclosure to provide a furnace temperature control device, a method of controlling furnace temperature, and a method of producing coke that enable highly accurate furnace temperature control by highly accurately predicting the future temperature of the combustion chamber or carburization chamber.

### (Solution to Problem)

(1) A furnace temperature control device according to an embodiment of the present disclosure is
   a furnace temperature control device for controlling a temperature of a combustion chamber or a carbonization chamber in a coke oven in which the combustion chamber and the carbonization chamber are connected alternately to form a furnace group, the furnace temperature control device including:
   an input apparatus configured to receive input of actual operation information including at least actual values of the temperature of the combustion chamber and the carbonization chamber and actual values of a heat supply to the combustion chamber and the carbonization chamber;
   a temperature prediction unit configured to calculate a predicted temperature that is the temperature of the combustion chamber or the carbonization chamber after a freely-selected predetermined time period, based on the actual operation information and a model representing a relationship between time-series data of the actual operation information going back a fixed time period from a certain time and the temperature of the combustion chamber or the carbonization chamber after a freely-selected predetermined time period from the certain time; and
   a furnace temperature control unit configured to calculate a heat supply to the combustion chamber or the carbonization chamber to achieve a target temperature, based on the calculated predicted temperature.
(2) As an embodiment of the present disclosure, in (1),
   with regard to coal charged into the carbonization chamber, the actual operation information includes an actual value of weight, an actual value of moisture content, an actual value of elapsed time from charging, and an actual value of an opening degree of a regulating valve that regulates a fuel gas supply to the combustion chamber.
(3) As an embodiment of the present disclosure, in (1) or (2),
   the temperature prediction unit is configured to calculate the predicted temperature based on the actual operation information for the combustion chamber and the carbonization chamber that are in close proximity in addition to the actual operation information for the combustion chamber or the carbonization chamber that is targeted for calculating the predicted temperature.
(4) As an embodiment of the present disclosure, in any one of (1) to (3),
   the temperature prediction unit is configured to partition time-series data, of the actual operation information going back a longer time period than a period of change of the temperature of the combustion chamber or the carburization chamber from a certain time, by the period of change of the temperature of the combustion chamber or the carburization chamber, and calculate a predicted temperature that is the temperature of the combustion chamber or the carburization chamber after the period of change of the temperature of the carburization chamber based on the actual operation information and a model representing a relationship between feature values of time-series data of the actual operation information for each partition and the temperature of the combustion chamber or the carburization chamber after the period of change of the temperature of the combustion chamber or the carburization chamber from the certain time.
(5) A method of controlling furnace temperature according to an embodiment of the present disclosure is
   a method of controlling furnace temperature to control a temperature of a combustion chamber or a carbonization chamber in a coke oven in which the combustion chamber and the carbonization chamber are connected alternately to form a furnace group, the method including:
   receiving input of actual operation information including at least actual values of the temperature of the combustion chamber and the carbonization chamber and actual values of a heat supply to the combustion chamber and the carbonization chamber;
   calculating a predicted temperature that is the temperature of the combustion chamber or the carbonization chamber after a freely-selected predetermined time period, based on the actual operation information and a model representing a relationship between time-series data of the actual operation information going back a fixed time period from a certain time and the temperature of the combustion chamber or the carbonization chamber after a freely-selected predetermined time period from the certain time; and
   calculating a heat supply to the combustion chamber or the carbonization chamber to achieve a target temperature, based on the calculated predicted temperature.
(6) As an embodiment of the present disclosure, in (5),
   with regard to coal charged into the carbonization chamber, the actual operation information includes an actual value of weight, an actual value of moisture content, an actual value of elapsed time from charging, and an actual value of an opening degree of a regulating valve that regulates a fuel gas supply to the combustion chamber.
(7) As an embodiment of the present disclosure, in (5) or (6),
   the calculating of the predicted temperature includes calculating the predicted temperature based on the actual operation information for the combustion chamber and the carbonization chamber that are in close proximity in addition to the actual operation information for the combustion chamber or the carbonization chamber that is targeted for calculating the predicted temperature.
(8) As an embodiment of the present disclosure, in any one of (5) to (7),
   the calculating of the predicted temperature includes partitioning time-series data, of the actual operation information going back a longer time period than a period of change of the temperature of the combustion chamber or the carburization chamber from a certain time, by the period of change of the temperature of the combustion chamber or the carburization chamber, and calculating a predicted temperature that is the temperature of the combustion chamber or the carburization chamber after the period of change of the temperature of the carburization chamber based on the actual operation information and a model representing a relationship between feature values of time-series data of the actual operation information for each partition and the temperature of the combustion chamber or the carburization chamber after the period of change of the temperature of the combustion chamber or the carburization chamber from the certain time.
(9) A method of producing coke according to an embodiment of the present disclosure includes
   producing coke by regulating, based on the heat supply to the combustion chamber or the carbonization chamber calculated by the method of controlling furnace temperature according to any one of (5) to (8), a fuel gas supply to the combustion chamber or an opening degree of a regulating valve that regulates the fuel gas supply.

### (Advantageous Effect)

According to the present disclosure, a furnace temperature control device, a method of controlling furnace temperature, and a method of producing coke that enable highly accurate furnace temperature control by highly accurately predicting the future temperature of the combustion chamber or carburization chamber can be provided.

### BRIEF DESCRIPTION OF THE DRAWINGS

In the accompanying drawings:
FIG. 1 is a schematic diagram illustrating a configuration of a furnace temperature control device according to an embodiment of the present disclosure;
FIG. 2 is a flowchart illustrating the processing flow in a method of controlling furnace temperature according to an embodiment of the present disclosure;
FIG. 3 is a plot of actual values vs. predicted values in a Conventional Example;
FIG. 4 is a plot of actual values vs. predicted values in an Example;
FIG. 5 is a diagram illustrating the relationship between actual values and predicted values in the Conventional Example; and
FIG. 6 is a diagram illustrating the relationship between actual values and predicted values in the Example.

### DETAILED DESCRIPTION

A furnace temperature control device, a method of controlling furnace temperature, and a method of producing coke according to an embodiment of the present disclosure will be described below with reference to the drawings.

### (Configuration of Furnace Temperature Control Device)

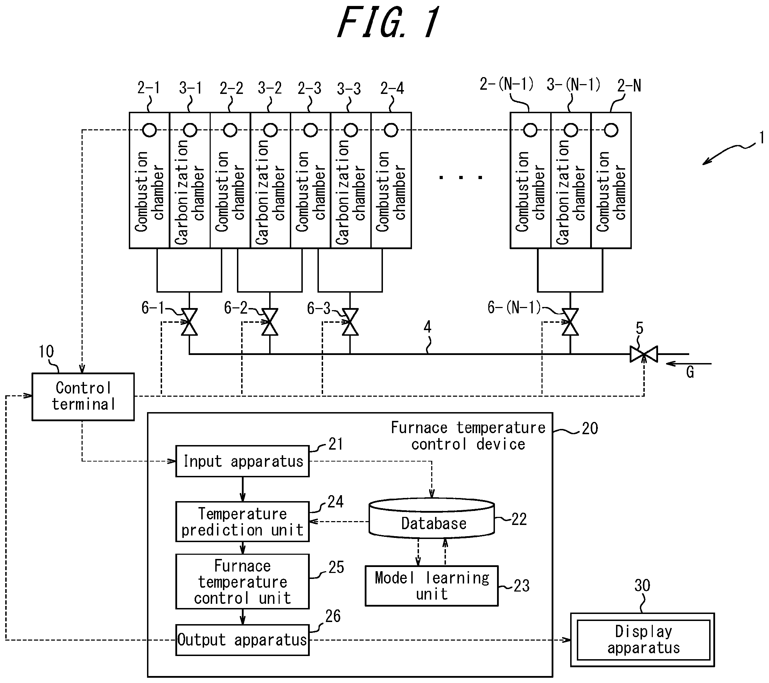

FIG. 1 is a schematic diagram illustrating a configuration of a furnace temperature control device 20 according to the present embodiment. The coke oven 1 illustrated in FIG. 1 includes N combustion chambers 2 (2-1 to 2-N) and N-1 carbonization chambers 3 (3-1 to 3-(N-1)), which are connected alternately to form a furnace group. N is an integer equal to or greater than 2 but is not limited to a specific number. In the coke oven 1, coal serving as raw material is charged into the carbonization chamber 3, and fuel gas G is supplied to the combustion chamber 2. The coke oven 1 produces coke through dry distillation of the coal in the carbonization chamber 3 by heating the carbonization chamber 3 with heat emitted from the combustion chambers 2 on both sides. The furnace temperature control device 20 according to the present embodiment controls the temperature of the combustion chamber 2 or the carbonization chamber 3 in the coke oven 1.

The coke oven 1 includes a gas main 4 connected at one end to a gas supply source. The other end of the gas main 4 is divided into N-1 branches that are piped to the combustion chambers 2 to supply the fuel gas G to the combustion chambers 2. A regulating valve 5 is provided at one end of the gas main 4 to regulate the flow rate of the fuel gas G supplied to the entire furnace group (total flow rate of the fuel gas G supplied to the combustion chambers 2). Each of the branches at the other end is provided with a furnace-specific regulating valve 6 (6-1 to 6-(N-1)) to finely regulate the distributed gas flow rate for supply to the combustion chambers 2. The fuel gas G finely regulated by the 1^{st} to (N-1)^{th} furnace-specific regulating valves 6 is supplied to the two combustion chambers 2 adjacent to the corresponding 1^{st} to (N-1)^{th} carbonization chambers 3. The opening degree (regulating valve opening degree) of the regulating valve 5 and the furnace-specific regulating valves 6 is controlled by a control terminal 10.

The furnace temperature control system includes the control terminal 10, the furnace temperature control device 20, and a display apparatus 30 as main components. The control terminal 10 is configured by an information processing apparatus such as a personal computer or workstation. The control terminal 10 monitors the condition of the combustion chambers 2 and the carbonization chambers 3 and manages the combustion chambers 2 and the carbonization chambers 3 according to the furnace temperature control device 20. The control terminal 10 also manages the operation of the coke oven 1. For example, the control terminal 10 regulates the regulating valve opening degree of the regulating valve 5 to control the flow rate of fuel gas G supplied to the entire furnace group so that the average temperature of the combustion chambers 2 and the carbonization chambers 3 in the entire furnace group becomes the target temperature. The control terminal 10 manages the operation of the coke oven 1 by regulating the regulating valve opening degree of the furnace-specific regulating valves 6 and controlling the flow rate of the fuel gas G supplied to the combustion chambers 2, so that the temperatures in the combustion chambers 2 and the carbonization chambers 3 become individually set target temperatures.

The furnace temperature control device 20 is configured by an information processing apparatus such as a personal computer or workstation. The furnace temperature control device 20 includes an input apparatus 21, a database 22, a model learning unit 23, a temperature prediction unit 24, a furnace temperature control unit 25, and an output apparatus 26.

The input apparatus 21 is an interface for input into which various measurement results and actual operation information regarding the coke oven 1 are inputted. Examples of the input apparatuses 21 include a keyboard, mouse, pointing device, data receiver, and graphical user interface (GUI). The input apparatus 21 receives actual operation information, parameter setting values, and the like from an external source, writes the information into the database 22, and transmits the information to the temperature prediction unit 24. The input apparatus 21 receives the actual operation information from the control terminal 10. The actual operation information includes at least actual values of the temperature of the combustion chamber 2 and the carbonization chamber 3 (temperature measurement results) and actual values of the heat supply to the combustion chamber 2 and the carbonization chamber 3. The actual values of the heat supply to the combustion chamber 2 and the carbonization chamber 3 may include the opening degree of the regulating valve 5 and the furnace-specific regulating valves 6. The actual operation information may include the flow rate and composition of the fuel gas G supplied to the entire furnace group. With regard to the coal charged into the carbonization chamber 3, the actual operation information preferably includes actual values of weight, actual values of moisture content, and actual values of elapsed time from charging.

Here, as described below, the temperature prediction unit 24 calculates the predicted temperature based on the actual operation information for the combustion chamber 2 and the carbonization chamber 3 that are in close proximity in addition to the actual operation information for the combustion chamber 2 or the carbonization chamber 3 that is targeted. Therefore, the actual operation information inputted to the input apparatus 21 includes not only the actual operation information for a specific combustion chamber 2 or carbonization chamber 3, but also the actual operation information for the combustion chambers 2 and carbonization chambers 3 in close proximity. In the present embodiment, when the actual operation information for combustion chamber 2-n, for example, is inputted, the actual operation information for the adjacent carbonization chamber 3-(n-1) and carbonization chamber 3-n are also inputted. Furthermore, the actual operation information for the combustion chamber 2-(n-1) and combustion chamber 2-(n+1) in close proximity is also inputted. The flow rate and composition of the fuel gas G related to the amount of heat supply to the combustion chamber 2-n may additionally be inputted. The opening degree of the regulating valve 5 and the opening degree of the furnace-specific regulating valve 6-(n-1) and the furnace-specific regulating valve 6-n may additionally be inputted. Here, the combustion chamber 2 and carbonization chamber 3 in close proximity do not necessarily include both a combustion chamber 2 and a carbonization chamber 3 but may be a plurality of combustion chambers 2 or a plurality of carbonization chambers 3.

The database 22 is a storage apparatus in which the actual operation information inputted into the input apparatus 21 and the models generated by the model learning unit 23 are stored. Various information inputted into the input apparatus 21 and model equations and parameters calculated by the model learning unit 23 are transmitted to the database 22. The model equations and parameters stored in the database 22 are used by the temperature prediction unit 24.

The model learning unit 23, temperature prediction unit 24, and furnace temperature control unit 25 are realized by an arithmetic processing unit such as a CPU. The model learning unit 23, the temperature prediction unit 24, and the furnace temperature control unit 25 are, for example, realized by execution of computer programs in an arithmetic processing unit. Here, as another example, the model learning unit 23, the temperature prediction unit 24, and the furnace temperature control unit 25 may have dedicated arithmetic devices or arithmetic circuits.

The model learning unit 23 generates a model representing the relationship between time-series data of the actual operation information going back a fixed time period from a certain time and the temperature of the combustion chamber 2 or the carbonization chamber 3 after a freely-selected time period from the certain time, based on the actual operation information stored in the database 22. In other words, a model is generated to predict the temperature of the targeted combustion chamber 2 or carbonization chamber 3 after a freely-selected time period. A freely-selected time period in this context means that there are no restrictions on the setting of the future time for predicting the temperature. Since the state of the coke oven 1 changes from moment to moment, there is thought to be a practical limit to the time that can be predicted with sufficient accuracy, depending also on the duration of the time-series data and other factors. No particular setting restrictions or the like based on prediction accuracy, however, are established in the generated model. Therefore, the future time for which the temperature is predicted can be set freely. The model learning unit 23 transmits the generated model equations and their parameters to the database 22. The model equations and their parameters are hereinafter referred to as the model.

The temperature prediction unit 24 calculates the predicted temperature of the combustion chamber 2 or the carbonization chamber 3 after a predetermined time period, which is freely selected at the time of model learning, based on the actual operation information transmitted from the input apparatus 21 and the model stored in the database 22. Here, the actual operation information transmitted from the input apparatus 21 may be the most recently measured (latest) actual operation information regarding the combustion chamber 2 or the carbonization chamber 3 that is targeted for calculating the predicted temperature. As described above, the actual operation information regarding the combustion chamber 2 or carbonization chamber 3 that is targeted includes the actual operation information for the combustion chamber 2 and the carbonization chamber 3 that are in close proximity in addition to the actual operation information for the combustion chamber 2 or the carbonization chamber 3 that is targeted. The temperature prediction unit 24 can calculate an accurate predicted temperature by taking into account heat conduction from the combustion chambers 2 and carbonization chambers 3 in close proximity. The temperature prediction unit 24 transmits the predicted temperature of the combustion chamber 2 or the carbonization chamber 3 calculated for after the freely-selected predetermined time period to the furnace temperature control unit 25.

The furnace temperature control unit 25 calculates the heat supply to the combustion chamber 2 or the carbonization chamber 3 to achieve a target temperature, based on the predicted temperature calculated by the temperature prediction unit 24. The calculation of the amount of heat supplied to the combustion chamber 2 or the carbonization chamber 3 may be a calculation of the regulating valve opening degree of the regulating valve 5 and the furnace-specific regulating valve 6 to satisfy the required heat supply. The furnace temperature control unit 25 transmits the calculated heat supply or regulating valve opening degree to the output apparatus 26.

The output apparatus 26 transmits the heat supply or the regulating valve opening degree calculated by the furnace temperature control unit 25 to the control terminal 10. The control terminal 10 regulates the opening degree of the regulating valve 5 and the furnace-specific regulating valve 6 based on the information transmitted from the output apparatus 26. In this way, the furnace temperature control device 20 controls the temperature of the combustion chamber 2 or the carbonization chamber 3 in the coke oven 1 via the control terminal 10. In a method of producing coke in the coke furnace 1, coke is produced by regulating, based on the heat supply to the combustion chamber 2 or the carbonization chamber 3 calculated by the furnace temperature control device 20, the fuel gas supply to the combustion chamber 2 or the opening degree of the regulating valve that regulates the fuel gas supply. The output apparatus 26 also has the function of transmitting the information calculated by the furnace temperature control device 20 to the display apparatus 30 for the display apparatus 30 to display the calculation results outputted from the furnace temperature control device 20. Here, the display device 30 is, for example, a liquid crystal display.

The furnace temperature control device 20 with this configuration accurately controls the temperature of the combustion chamber 2 or the carbonization chamber 3 by executing the furnace temperature control process described below.

### (Furnace Temperature Control Process)

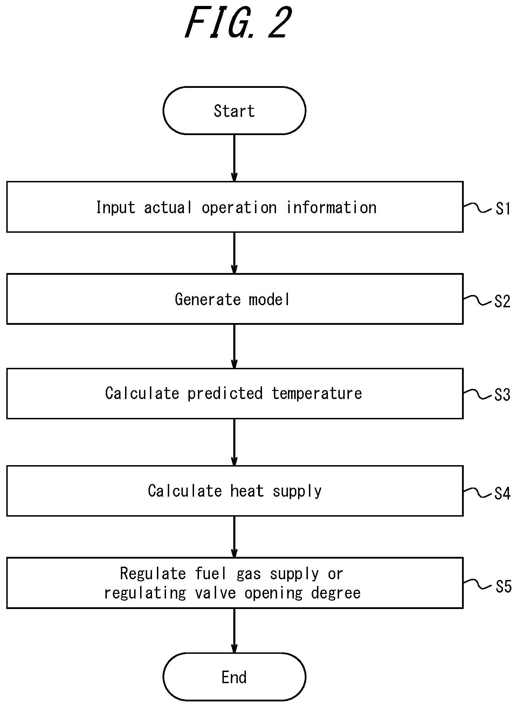

FIG. 2 is a flowchart illustrating the flow of a process, executed by the furnace temperature control device 20 according to an embodiment of the present disclosure, for a furnace temperature control method (furnace temperature control process). The flowchart illustrated in FIG. 2 may be started at any timing at which the actual operation information is acquired or any timing at which a signal indicating the start of processing is inputted from an external source.

In step S1 (input step), the input apparatus 21 acquires the actual operation information. The input apparatus 21 transmits the acquired actual operation information to the database 22 and the temperature prediction unit 24. The furnace temperature control process then proceeds to step S2.

In step S2 (model generation step), the model learning unit 23 generates a model based on the actual operation information stored in the database 22. The process in step S2 may be executed each time actual operation information is acquired by step S1, or when model generation is indicated by a signal inputted from an external source. In other words, the furnace temperature control process may proceed to step S3 without execution of step S2. In a case in which the process in step S2 is not executed, the most recent model generated by the model learning unit 23 and stored in the database 22 may be used.

In the process in step S2, letting the time-series data matrix of the actual operation information, which serves as input to the model to be generated, be X, and the temperature of combustion chamber 2 or carbonization chamber 3 after a freely-selected time period, which serves as the output, be y, the model to be generated can be expressed by Equations (1) and (2) below.${y}_{t + u} = f \left({X}_{t}\right)$ ${X}_{t} = \left[\begin{matrix}{x}_{t , 1} & ⋯ & {x}_{t , j} \\ ⋮ & ⋱ & ⋮ \\ {x}_{t - i , 1} & ⋯ & {x}_{t - i , j}\end{matrix}\right]$

Here, the X and y subscripts represent time, t is a freely-selected certain time in the past, u is a freely-selected time period, (t+u) is the time for which prediction is to be made, i is a freely-selected backward time period going back from the certain time t, j is the number of items in the actual operation information, and f is a function illustrating the relationship between a time-series data matrix of j pieces of the actual operation information from time t going back by i and the temperature of the combustion chamber 2 or the carbonization chamber 3 in the future after u, which is a time period from the certain time t.

One model input-output data set is created for one time t, but in general, it is known that the more data sets, the better the accuracy of the model for unknown input. Therefore, a data set is preferably created for as many times t as possible.

The time period u for setting the future time for prediction and the backward time period i are preferably set appropriately according to the time constant or settling time of the response to the temperature change in the combustion chamber 2 or the carbonization chamber 3. The time constant or settling time is the time constant or settling time with respect to the heat supply to the combustion chamber 2 or the carbonization chamber 3 or the operation on the regulating valve opening degree. For example, in a case in which the sum of u and i is extremely shorter than the settling time, the model accuracy may deteriorate, because temperature changes and the like at times prior to i, the backward time period, cannot be taken into consideration. In addition, in a coke oven, the process from charging to extrusion is typically carried out in a fixed cycle for one kiln. The temperature to be predicted therefore varies periodically in a steady state, in correspondence with the operation cycle. In a case in which y, the temperature to be predicted, exhibits periodic behavior, the sum of u and i may be set to a multiple of the period of change (period of variation) of y. The prediction error due to periodic changes in the temperature of the target to be predicted can be reduced by setting u and i in this way.

It suffices for the number of data points from time t to (t-i), i.e., the number of rows of xt, to be set to the number yielded by dividing i by the input period in a case in which the actual operation information is inputted periodically (discretely at each input period). The number of data points from time t to (t-i) may be set to the number yielded by dividing i by the temperature period in a case in which the temperature to be predicted exhibits periodic behavior. Feature values, including the average or rate of change of the actual operation information, may be calculated and inputted in a case in which the input cycle of the actual operation information is shorter than the data interval from time t to (t-i). Linearly interpolated values of the actual operation information may be inputted in a case in which the input cycle of the actual operation information is longer than the data interval from time t to (t-i). By the inputted actual operation information thus being partitioned by period of change, i.e., by processing the actual operation information into partitions corresponding to periodic changes in the temperature to be predicted, it is possible to reduce the prediction error due to periodic changes in the temperature to be predicted.

In relation to the aforementioned j, the items of the actual operation information include at least actual values of the temperature of the combustion chamber 2 and the carbonization chamber 3 (temperature measurement results) and actual values of the heat supply to the combustion chamber 2 and the carbonization chamber 3, as described above. The actual values of the heat supply to the combustion chamber 2 and the carbonization chamber 3 may include the opening degree of the regulating valve 5 and the furnace-specific regulating valves 6. The items of the actual operation information also include actual values for the combustion chamber 2 and carbonization chamber 3 in close proximity. The items of the actual operation information may include the flow rate and composition of the fuel gas G supplied to the entire furnace group. Also, with regard to the coal charged into the carbonization chamber 3, the items of the actual operation information preferably include actual values of weight, actual values of moisture content, and actual values of elapsed time from charging.

The function f is preferably a model that can efficiently learn or explain the characteristics of the variation information in the direction of the backward time period i, i.e., the line direction of Xt. For example, a regression neural network, in which the values of the output layer for the input from the previous time are used as the input layer for the next time, may be used as a method of generating the model. Neural networks with convolutional layers for two-dimensional Xt may also be used as a method for generating the model. Automatic machine learning logic, in which model accuracy is calculated for a plurality of models and the best model is selected, may also be used. A method of combining a plurality of models, called ensemble learning, may also be used.

The model learning unit 23 transmits the generated model to the database 22. The furnace temperature control process then proceeds to step S3.

In step S3 (temperature prediction step), the temperature prediction unit 24 calculates (predicts) the temperature of the combustion chamber 2 or the carbonization chamber 3 at a future time (t+u) defined during model learning. The temperature prediction unit 24 processes the actual operation information acquired by the input apparatus 21 into the same format as Xt above. The temperature prediction unit 24 calculates the temperature of the combustion chamber 2 or the carbonization chamber 3 by inputting the processed actual operation information into the model generated by the model learning unit 23. Here, in a case in which a plurality of models is generated, the temperature prediction unit 24 preferably selects the model generated by the data set with similar values of the processed actual operation information (x_{t,1} to x_{t,j}). The temperature prediction unit 24 transmits the temperature of the combustion chamber 2 or the carbonization chamber 3 calculated for the future time to the furnace temperature control unit 25. The furnace temperature control process then proceeds to step S4.

In the process in step S4, the furnace temperature control unit 25 calculates the heat supply to the combustion chamber 2 or the carbonization chamber 3 to achieve a target temperature, based on the temperature of the combustion chamber 2 or the carbonization chamber 3 calculated by the temperature prediction unit 24. The heat supply is determined so as to minimize the difference between the temperature of the combustion chamber 2 or the carbonization chamber 3 (target temperature), which was set for the time of prediction (t+u), and the predicted temperature. Here, for further accuracy, the relationship between the heat supply and the amount of temperature change may be modeled, based on the mass and specific heat of the fuel gas in the combustion chamber 2, the coal in the carbonization chamber 3, and materials related to the furnace wall, and the relationship may be used in the calculation. The relationship between the heat supply and the amount of temperature change may be modeled based on the relationship between the change in the heat supply and the change in the temperature of the combustion chamber 2 or the carbonization chamber 3 in past performance data.

The furnace temperature control unit 25 may calculate the regulating valve opening degree of the regulating valve 5 and the furnace-specific regulating valves 6 to satisfy the required heat supply. Here, for further accuracy, the relationship between the regulating valve opening degree and the fuel gas flow rate may be modeled based on physical laws and used in the calculation. The relationship between the regulating valve opening degree and the change in heat supply or temperature may be modeled based on the relationship between the regulating valve opening degree and the change in heat supply to the combustion chamber 2 or the carbonization chamber 3 or temperature in past performance data. The furnace temperature control unit 25 transmits the calculated heat supply or regulating valve opening degree to the output apparatus 26. The furnace temperature control process then proceeds to step S5.

In the process in step S5, the output apparatus 26 transmits the heat supply or the regulating valve opening degree calculated by the furnace temperature control unit 25 to the control terminal 10. The control terminal 10 regulates the opening degree of the regulating valve 5 and the furnace-specific regulating valves 6 based on the information transmitted from the output apparatus 26. The information calculated by the furnace temperature control device 20 is also transmitted to the display apparatus 30 and displayed on the screen. Therefore, the operator can also regulate the opening degrees of the regulating valve 5 and the furnace-specific regulating valves 6 based on the displayed calculation results. This completes the furnace temperature control process. Steps S4 and S5 may also be referred to as the furnace temperature control step.

As described above, the furnace temperature control device 20, the method of controlling furnace temperature, and the method of producing coke according to the present embodiment can predict the temperature after a freely-selected time period with high accuracy using a model that even takes into account a plurality of furnace temperature variation factors and the effects of the combustion chamber 2 and carburization chamber 3 in close proximity. Furnace temperature variations due to continuous variation of a plurality of furnace temperature variation factors in the coke oven 1 can therefore be predicted accurately, enabling highly accurate furnace temperature control.

### EXAMPLES

The effects of the present disclosure will be described in detail below based on examples, but the present disclosure is not limited to the content of the examples.

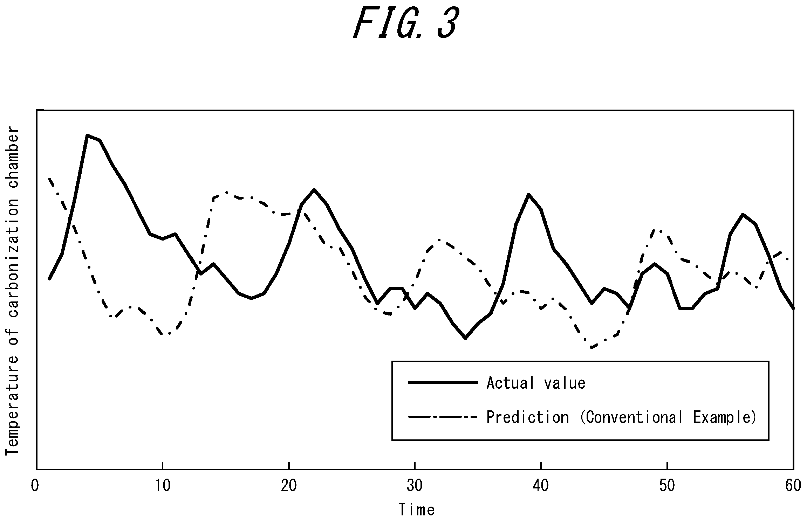

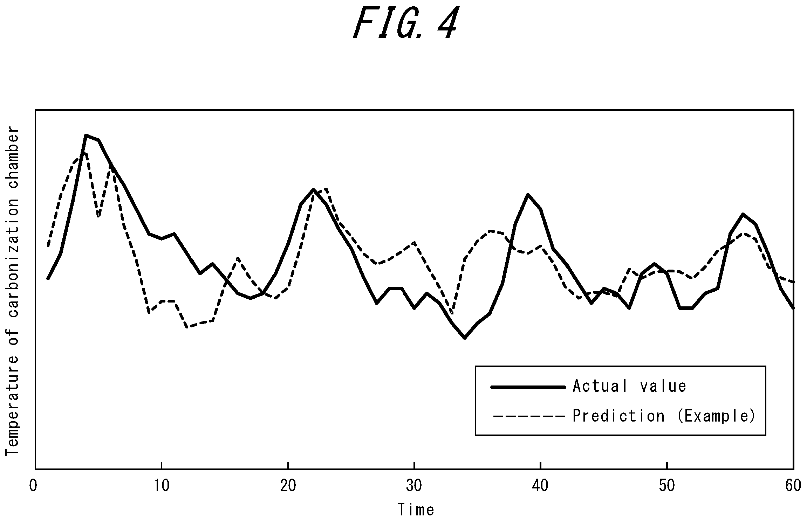

The prediction accuracy was evaluated for the case of predicting the temperature of the carbonization chamber 3 using the apparatus and method described in the above embodiment (Example) and the case of predicting the temperature of the carbonization chamber 3 using a conventional prediction method (Conventional Example). In the example (Example), the time period defining the future time for prediction (the aforementioned u) was 12 hours, and the backward time period (the aforementioned i) was 17 hours. The temperatures of the target carbonization chamber 3 and the two adjacent carbonization chambers 3 and the amount of fuel gas supplied to the two combustion chambers 2 adjacent to the target carbonization chamber 3 were used as actual operation information. The actual operation information was inputted hourly. A regression neural network model with long-term and short-term memory structures in the intermediate layers was used as the model for the Example. In the Conventional Example, a model was used to predict the temperature of the target carbonization chamber 3 after 12 hours based on 17 hours worth of past rates of change for the temperature of the carbonization chamber 3. FIGS. 3 and 4 are plots of actual values vs. predicted values of the temperature of the carbonization chamber 3 after 12 hours. In the Conventional Example in FIG. 3, there are times when the upper and lower limit variations of the actual values do not match the variations of the predicted values. In the Example in FIG. 4, the variations in the actual values are accurately tracked and predicted.

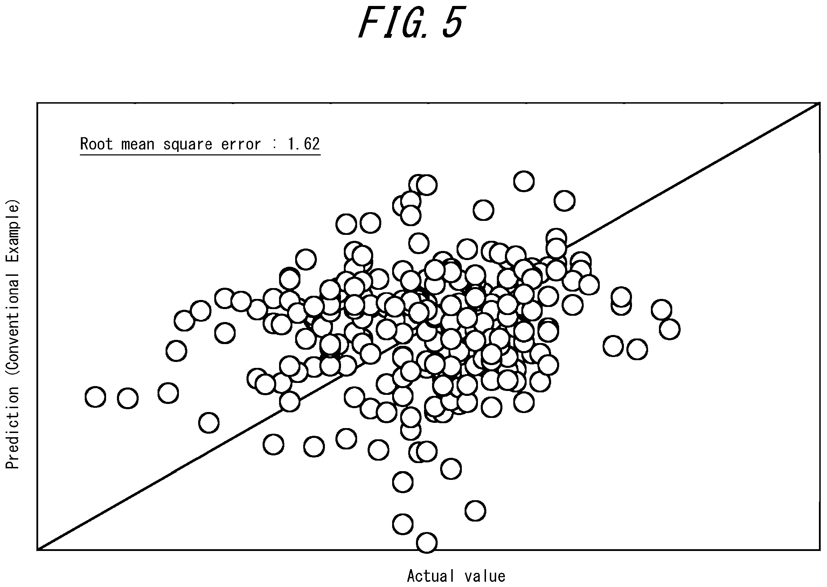

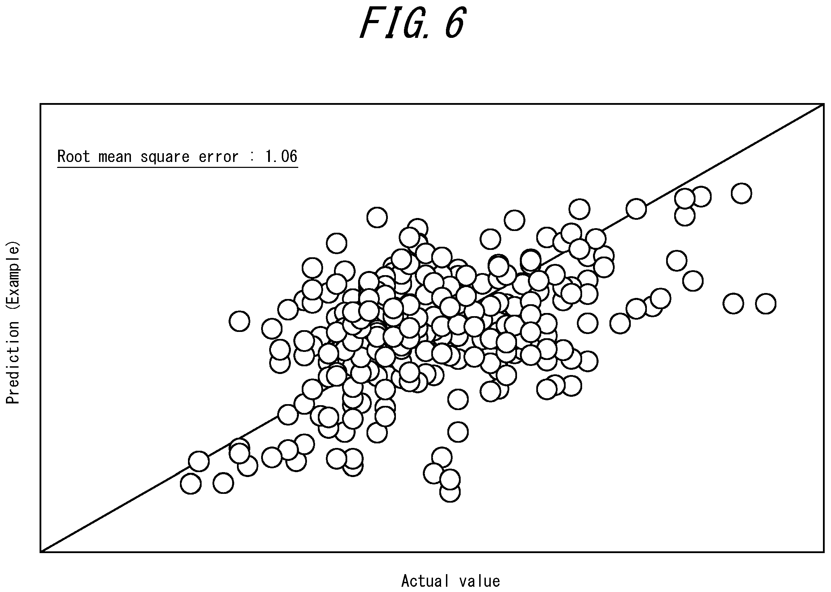

FIGS. 5 and 6 are diagrams plotting the relationship between actual values and predicted values at each time. In the Conventional Example in FIG. 5, the error between the actual values and predicted values was large, with a root mean square error of 1.62. In the example in FIG. 6, the error between the actual values and predicted values was small, with a root mean square error of 1.06. It was confirmed that the apparatus and method described in the above embodiment enable highly accurate prediction of future furnace temperature variations, thereby improving the accuracy of furnace temperature control.

While embodiments of the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

### REFERENCE SIGNS LIST

- 1: Coke oven
- 2: Combustion chamber
- 3: Carbonization chamber
- 4: Gas main
- 5: Regulating valve
- 6: Furnace-specific regulating valve
- 10: Control terminal
- 20: Furnace temperature control device
- 21: Input apparatus
- 22: Database
- 23: Model learning unit
- 24: Temperature prediction unit
- 25: Furnace temperature control unit
- 26: Output apparatus
- 30: Display apparatus

## Claims

1. A furnace temperature control device for controlling a temperature of a combustion chamber or a carbonization chamber in a coke oven in which the combustion chamber and the carbonization chamber are connected alternately to form a furnace group, the furnace temperature control device comprising:
an input apparatus configured to receive input of actual operation information including at least actual values of the temperature of the combustion chamber and the carbonization chamber and actual values of a heat supply to the combustion chamber and the carbonization chamber;
a temperature prediction unit configured to calculate a predicted temperature that is the temperature of the combustion chamber or the carbonization chamber after a freely-selected predetermined time period, based on the actual operation information and a model representing a relationship between time-series data of the actual operation information going back a fixed time period from a certain time and the temperature of the combustion chamber or the carbonization chamber after a freely-selected predetermined time period from the certain time; and
a furnace temperature control unit configured to calculate a heat supply to the combustion chamber or the carbonization chamber to achieve a target temperature, based on the calculated predicted temperature.

2. The furnace temperature control device according to claim 1, wherein with regard to coal charged into the carbonization chamber, the actual operation information includes an actual value of weight, an actual value of moisture content, an actual value of elapsed time from charging, and an actual value of an opening degree of a regulating valve that regulates a fuel gas supply to the combustion chamber.

3. The furnace temperature control device according to claim 1 or 2, wherein the temperature prediction unit is configured to calculate the predicted temperature based on the actual operation information for the combustion chamber and the carbonization chamber that are in close proximity in addition to the actual operation information for the combustion chamber or the carbonization chamber that is targeted for calculating the predicted temperature.

4. The furnace temperature control device according to any one of claims 1 to 3, wherein the temperature prediction unit is configured to partition time-series data, of the actual operation information going back a longer time period than a period of change of the temperature of the combustion chamber or the carburization chamber from a certain time, by the period of change of the temperature of the combustion chamber or the carburization chamber, and calculate a predicted temperature that is the temperature of the combustion chamber or the carburization chamber after the period of change of the temperature of the carburization chamber based on the actual operation information and a model representing a relationship between feature values of time-series data of the actual operation information for each partition and the temperature of the combustion chamber or the carburization chamber after the period of change of the temperature of the combustion chamber or the carburization chamber from the certain time.

5. A method of controlling furnace temperature to control a temperature of a combustion chamber or a carbonization chamber in a coke oven in which the combustion chamber and the carbonization chamber are connected alternately to form a furnace group, the method comprising:
receiving input of actual operation information including at least actual values of the temperature of the combustion chamber and the carbonization chamber and actual values of a heat supply to the combustion chamber and the carbonization chamber;
calculating a predicted temperature that is the temperature of the combustion chamber or the carbonization chamber after a freely-selected predetermined time period, based on the actual operation information and a model representing a relationship between time-series data of the actual operation information going back a fixed time period from a certain time and the temperature of the combustion chamber or the carbonization chamber after a freely-selected predetermined time period from the certain time; and
calculating a heat supply to the combustion chamber or the carbonization chamber to achieve a target temperature, based on the calculated predicted temperature.

6. The method of controlling furnace temperature according to claim 5, wherein with regard to coal charged into the carbonization chamber, the actual operation information includes an actual value of weight, an actual value of moisture content, an actual value of elapsed time from charging, and an actual value of an opening degree of a regulating valve that regulates a fuel gas supply to the combustion chamber.

7. The method of controlling furnace temperature according to claim 5 or 6, wherein the calculating of the predicted temperature includes calculating the predicted temperature based on the actual operation information for the combustion chamber and the carbonization chamber that are in close proximity in addition to the actual operation information for the combustion chamber or the carbonization chamber that is targeted for calculating the predicted temperature.

8. The method of controlling furnace temperature according to any one of claims 5 to 7, wherein the calculating of the predicted temperature includes partitioning time-series data, of the actual operation information going back a longer time period than a period of change of the temperature of the combustion chamber or the carburization chamber from a certain time, by the period of change of the temperature of the combustion chamber or the carburization chamber, and calculating a predicted temperature that is the temperature of the combustion chamber or the carburization chamber after the period of change of the temperature of the carburization chamber based on the actual operation information and a model representing a relationship between feature values of time-series data of the actual operation information for each partition and the temperature of the combustion chamber or the carburization chamber after the period of change of the temperature of the combustion chamber or the carburization chamber from the certain time.

9. A method of producing coke, the method comprising producing coke by regulating, based on the heat supply to the combustion chamber or the carbonization chamber calculated by the method of controlling furnace temperature according to any one of claims 5 to 8, a fuel gas supply to the combustion chamber or an opening degree of a regulating valve that regulates the fuel gas supply.

## Patentansprüche

1. Ofentemperatursteuervorrichtung zum Steuern einer Temperatur einer Brennkammer oder einer Verkokungskammer in einem Koksofen, in dem die Brennkammer und die Verkokungskammer abwechselnd verbunden sind, um eine Ofengruppe zu bilden, wobei die Ofentemperatursteuervorrichtung umfasst:
eine Eingabeeinrichtung, die konfiguriert ist, Eingabe von Ist-Betriebsinformationen zu empfangen, die mindestens Istwerte der Temperatur der Brennkammer und der Verkokungskammer und Istwerte einer Wärmezufuhr zu der Brennkammer und der Verkokungskammer beinhalten;
eine Temperaturvorhersageeinheit, die konfiguriert ist, eine vorhergesagte Temperatur zu berechnen, die die Temperatur der Brennkammer oder der Verkokungskammer nach einem frei wählbaren vorbestimmten Zeitraum ist, basierend auf den Ist-Betriebsinformationen und einem Modell, das eine Beziehung zwischen Zeitreihendaten der Ist-Betriebsinformationen, die einen festen Zeitraum von einem bestimmten Zeitpunkt zurückreichen, und der Temperatur der Brennkammer oder der Verkokungskammer nach einem frei wählbaren vorbestimmten Zeitraum von dem bestimmten Zeitpunkt darstellt; und
eine Ofentemperatursteuereinheit, die konfiguriert ist, eine Wärmezufuhr zu der Brennkammer oder der Verkokungskammer zum Erreichen einer Solltemperatur basierend auf der berechneten vorhergesagten Temperatur zu berechnen.

2. Ofentemperatursteuervorrichtung nach Anspruch 1, wobei in Bezug auf in die Verkokungskammer chargierte Kohle die Ist-Betriebsinformationen einen Istwert des Gewichts, einen Istwert des Feuchtigkeitsgehalts, einen Istwert der verstrichenen Zeit seit dem Chargieren und einen Istwert eines Öffnungsgrads eines Regelventils, das eine Brenngaszufuhr zu der Brennkammer regelt, beinhalten.

3. Ofentemperatursteuervorrichtung nach Anspruch 1 oder 2, wobei die Temperaturvorhersageeinheit konfiguriert ist, die vorhergesagte Temperatur basierend auf den Ist-Betriebsinformationen für die Brennkammer und die Verkokungskammer, die sich in unmittelbarer Nähe befinden, zusätzlich zu den Ist-Betriebsinformationen für die Brennkammer oder die Verkokungskammer, die für Berechnen der vorhergesagten Temperatur anvisiert ist, zu berechnen.

4. Ofentemperatursteuervorrichtung nach einem der Ansprüche 1 bis 3, wobei die Temperaturvorhersageeinheit konfiguriert ist, Zeitreihendaten der Ist-Betriebsinformationen, die einen längeren Zeitraum als einen Änderungszeitraum der Temperatur der Brennkammer oder der Verkokungskammer von einem bestimmten Zeitpunkt zurückreichen, nach dem Änderungszeitraum der Temperatur der Brennkammer oder der Verkokungskammer zu partitionieren und eine vorhergesagte Temperatur zu berechnen, die die Temperatur der Brennkammer oder der Verkokungskammer nach dem Änderungszeitraum der Temperatur der Verkokungskammer ist, basierend auf den Ist-Betriebsinformationen und einem Modell, das eine Beziehung zwischen Merkmalswerten von Zeitreihendaten der Ist-Betriebsinformationen für jede Partition und der Temperatur der Brennkammer oder der Verkokungskammer nach dem Änderungszeitraum der Temperatur der Brennkammer oder der Verkokungskammer von dem bestimmten Zeitpunkt darstellt.

5. Verfahren zur Ofentemperatursteuerung zum Steuern einer Temperatur einer Brennkammer oder einer Verkokungskammer in einem Koksofen, in dem die Brennkammer und die Verkokungskammer abwechselnd verbunden sind, um eine Ofengruppe zu bilden, wobei das Verfahren umfasst:
Empfangen einer Eingabe von Ist-Betriebsinformationen, die mindestens Istwerte der Temperatur der Brennkammer und der Verkokungskammer und Istwerte einer Wärmezufuhr zu der Brennkammer und der Verkokungskammer beinhalten;
Berechnen einer vorhergesagten Temperatur, die die Temperatur der Brennkammer oder der Verkokungskammer nach einem frei wählbaren vorbestimmten Zeitraum ist, basierend auf den Ist-Betriebsinformationen und einem Modell, das eine Beziehung zwischen Zeitreihendaten der Ist-Betriebsinformationen, die einen festen Zeitraum von einem bestimmten Zeitpunkt zurückreichen, und der Temperatur der Brennkammer oder der Verkokungskammer nach einem frei wählbaren vorbestimmten Zeitraum von dem bestimmten Zeitpunkt darstellt; und
Berechnen einer Wärmezufuhr zu der Brennkammer oder der Verkokungskammer zum Erreichen einer Solltemperatur basierend auf der berechneten vorhergesagten Temperatur.

6. Verfahren zur Ofentemperatursteuerung nach Anspruch 5, wobei in Bezug auf in die Verkokungskammer chargierte Kohle die Ist-Betriebsinformationen einen Istwert des Gewichts, einen Istwert des Feuchtigkeitsgehalts, einen Istwert der verstrichenen Zeit seit dem Chargieren und einen Istwert eines Öffnungsgrads eines Regelventils, das eine Brenngaszufuhr zu der Brennkammer regelt, beinhalten.

7. Verfahren zur Ofentemperatursteuerung nach Anspruch 5 oder 6, wobei Berechnen der vorhergesagten Temperatur Berechnen der vorhergesagten Temperatur basierend auf den Ist-Betriebsinformationen für die Brennkammer und die Verkokungskammer, die sich in unmittelbarer Nähe befinden, zusätzlich zu den Ist-Betriebsinformationen für die Brennkammer oder die Verkokungskammer, die für Berechnen der vorhergesagten Temperatur anvisiert ist, beinhaltet.

8. Verfahren zur Ofentemperatursteuerung nach einem der Ansprüche 5 bis 7, wobei Berechnen der vorhergesagten Temperatur Partitionieren von Zeitreihendaten der Ist-Betriebsinformationen, die einen längeren Zeitraum als einen Änderungszeitraum der Temperatur der Brennkammer oder der Verkokungskammer von einem bestimmten Zeitpunkt zurückreichen, nach dem Änderungszeitraum der Temperatur der Brennkammer oder der Verkokungskammer und Berechnen einer vorhergesagten Temperatur, die die Temperatur der Brennkammer oder der Verkokungskammer nach dem Änderungszeitraum der Temperatur der Verkokungskammer ist, basierend auf den Ist-Betriebsinformationen und einem Modell, das eine Beziehung zwischen Merkmalswerten von Zeitreihendaten der Ist-Betriebsinformationen für jede Partition und der Temperatur der Brennkammer oder der Verkokungskammer nach dem Änderungszeitraum der Temperatur der Brennkammer oder der Verkokungskammer von dem bestimmten Zeitpunkt darstellt, beinhaltet.

9. Verfahren zum Herstellen von Koks, wobei das Verfahren Herstellen von Koks durch Regeln, basierend auf der durch das Verfahren zur Ofentemperatursteuerung nach einem der Ansprüche 5 bis 8 berechneten Wärmezufuhr zu der Brennkammer oder der Verkokungskammer, einer Brenngaszufuhr zu der Brennkammer oder eines Öffnungsgrads eines Regelventils, das die Brenngaszufuhr regelt, umfasst.

## Revendications

1. Dispositif de régulation de la température d'un four destiné à réguler une température d'une chambre de combustion ou d'une chambre de carbonisation dans un four à coke dans lequel la chambre de combustion et la chambre de carbonisation sont reliées alternativement pour former un groupe de four, le dispositif de régulation de la température d'un four comprenant :
un appareil d'entrée configuré pour recevoir une entrée d'informations de fonctionnement réelles comportant au moins des valeurs réelles de la température de la chambre de combustion et de la chambre de carbonisation et des valeurs réelles d'un apport de chaleur à la chambre de combustion et à la chambre de carbonisation ;
une unité de prédiction de température configurée pour calculer une température prédite, c'est-à-dire la température de la chambre de combustion ou de la chambre de carbonisation après une période de temps prédéterminée librement choisie, sur la base des informations de fonctionnement réelles et d'un modèle représentant une relation entre des données chronologiques des informations de fonctionnement réelles remontant à une période de temps fixe à partir d'un certain instant et la température de la chambre de combustion ou de la chambre de carbonisation après une période de temps prédéterminée librement choisie à partir de l'instant certain ; et
une unité de régulation de température de four configurée pour calculer un apport de chaleur à la chambre de combustion ou à la chambre de carbonisation afin d'atteindre une température cible, sur la base de la température prédite calculée.

2. Dispositif de régulation de la température d'un four selon la revendication 1, dans lequel, en ce qui concerne le charbon chargé dans la chambre de carbonisation, les informations de fonctionnement réelles comportent une valeur réelle de poids, une valeur réelle de teneur en humidité, une valeur réelle de temps écoulé depuis le chargement, et une valeur réelle d'un degré d'ouverture d'une vanne de régulation qui régule une alimentation en gaz combustible vers la chambre de combustion.

3. Dispositif de régulation de la température d'un four selon la revendication 1 ou la revendication 2, dans lequel l'unité de prédiction de température est configurée pour calculer la température prédite sur la base des informations de fonctionnement réelles de la chambre de combustion et de la chambre de carbonisation qui sont à proximité, en plus des informations de fonctionnement réelles de la chambre de combustion ou de la chambre de carbonisation ciblée pour le calcul de la température prédite.

4. Dispositif de régulation de la température d'un four selon l'une quelconque des revendications 1 à 3, dans lequel l'unité de prédiction de température est configurée pour partitionner des données de série temporelle des informations de fonctionnement réelles remontant à une période de temps plus longue qu'une période de variation de la température de la chambre de combustion ou de la chambre de cémentation à partir d'un certain instant, en fonction de la période de variation de la température de la chambre de combustion ou de la chambre de cémentation, et calculer une température prédite, qui est la température de la chambre de combustion ou de la chambre de cémentation après la période de variation de la température de la chambre de cémentation, sur la base des informations de fonctionnement réelles et d'un modèle représentant une relation entre des valeurs caractéristiques de données de série temporelle des informations de fonctionnement réelles pour chaque partition et la température de la chambre de combustion ou de la chambre de cémentation après la période de variation de la température de la chambre de combustion ou de la chambre de cémentation à partir d'un certain instant.

5. Procédé de régulation de la température d'un four destiné à réguler une température d'une chambre de combustion ou d'une chambre de carbonisation dans un four à coke dans lequel la chambre de combustion et la chambre de carbonisation sont reliées alternativement pour former un groupe de four, le procédé comprenant :
la réception d'une entrée d'informations de fonctionnement réelles comportant au moins des valeurs réelles de la température de la chambre de combustion et de la chambre de carbonisation et des valeurs réelles d'un apport de chaleur à la chambre de combustion et à la chambre de carbonisation ;
le calcul d'une température prédite, c'est-à-dire la température de la chambre de combustion ou de la chambre de carbonisation après une période de temps prédéterminée librement choisie, sur la base des informations de fonctionnement réelles et d'un modèle représentant une relation entre des données chronologiques des informations de fonctionnement réelles remontant à une période de temps fixe à partir d'un certain instant et la température de la chambre de combustion ou de la chambre de carbonisation après une période de temps prédéterminée librement choisie à partir de l'instant certain ; et
le calcul d'un apport de chaleur à la chambre de combustion ou à la chambre de carbonisation afin d'atteindre une température cible, sur la base de la température prédite calculée.

6. Procédé de régulation de la température d'un four selon la revendication 5, dans lequel, en ce qui concerne le charbon chargé dans la chambre de carbonisation, les informations de fonctionnement réelles comportent une valeur réelle de poids, une valeur réelle de teneur en humidité, une valeur réelle de temps écoulé depuis le chargement, et une valeur réelle d'un degré d'ouverture d'une vanne de régulation qui régule une alimentation en gaz combustible vers la chambre de combustion.

7. Procédé de régulation de la température d'un four selon la revendication 5 ou la revendication 6, dans lequel le calcul de la température prédite comporte le calcul de la température prédite sur la base des informations de fonctionnement réelles de la chambre de combustion et de la chambre de carbonisation qui sont à proximité, en plus des informations de fonctionnement réelles de la chambre de combustion ou de la chambre de carbonisation ciblée pour le calcul de la température prédite.

8. Procédé de régulation de la température d'un four selon l'une quelconque des revendications 5 à 7, dans lequel le calcul de la température prédite comporte le partitionnement de données de série temporelle des informations de fonctionnement réelles remontant à une période de temps plus longue qu'une période de variation de la température de la chambre de combustion ou de la chambre de cémentation à partir d'un certain instant, en fonction de la période de variation de la température de la chambre de combustion ou de la chambre de cémentation, et le calcul d'une température prédite, qui est la température de la chambre de combustion ou de la chambre de cémentation après la période de variation de la température de la chambre de cémentation, sur la base des informations de fonctionnement réelles et d'un modèle représentant une relation entre des valeurs caractéristiques de données de série temporelle des informations de fonctionnement réelles pour chaque partition et la température de la chambre de combustion ou de la chambre de cémentation après la période de variation de la température de la chambre de combustion ou de la chambre de cémentation à partir d'un certain instant.

9. Procédé de production de coke, le procédé comprenant la production de coke par régulation, sur la base de l'apport de chaleur à la chambre de combustion ou à la chambre de carbonisation calculé par le procédé de régulation de la température d'un four selon l'une quelconque des revendications 5 à 8, d'une alimentation en gaz combustible à la chambre de combustion ou d'un degré d'ouverture d'une vanne de régulation qui régule l'alimentation en gaz combustible.
